# EUROPEAN PATENT APPLICATION

(11) **EP 4 391 507 A1**
(43) Date of publication of application: **26.06.2024**
(21) Application number: 21954275.0
(22) Date of filing: 20.08.2021
(51) Int. Cl.: H04M 1/72

(54) **MOBILE INFORMATION TERMINAL AND METHOD FOR CONTROLLING SAME**

(71) Applicant: Maxell, Ltd., Kyoto 618-8525 (JP)
(72) Inventor: HASHIMOTO Yasunobu, Otokuni-gun, Kyoto 618-8525 (JP); AKIYAMA Hitoshi, Otokuni-gun, Kyoto 618-8525 (JP); YOSHIZAWA Kazuhiko, Otokuni-gun, Kyoto 618-8525 (JP)
(74) Representative: Mewburn Ellis LLP
(86) International application number: PCT/JP2021/030684
(87) International publication number: WO 2023/021709

(57) **Abstract**

The objective is to provide a mobile information terminal (1) wherein the battery remaining of a secondary battery can be effectively used.

Therefore, the configuration is such that a mobile information terminal (1) includes a second battery (108), a controller (101), and a memory apparatus (102), wherein the controller (101) performs prediction of electricity usage and power charging opportunity prediction from schedule be memorized in the memory apparatus (102), and sets power saving mode with different power saving level to reduce power consumption, based on the prediction of electricity usage and the power charging opportunity prediction.

## Description

### BACKGROUND OF THE INVENTION

### 1. Field of the Invention

This invention relates to a technique for effectively utilizing the remaining battery power of a secondary battery in a mobile information terminal.

### 2. Description of the Related Art

As background technology in this technical field, there is JP-A-2017-50655. In JP-A-2017-50655, an information processing device driven by electric power supplied from a secondary battery is configured with an action schedule determination unit that determines whether or not the user's planned action is a non-chargeable action in which it is impossible or difficult for the user to start charging the above secondary battery, and a notification unit that notifies the low battery power of the above secondary battery before the start time of the above planned action that is determined by the above action schedule determination unit to be a non-chargeable action.

JP-A-2017-50655 describes a warning against running out of remaining battery capacity in the secondary battery based on a planned action. However, it does not take into account the perspective of effectively using the remaining battery capacity by predicting the future usage of the portable information terminal, and is insufficient in terms of providing a portable information terminal with high convenience for the user.

In view of the above issues, it is an object of the present invention to provide a mobile information terminal capable of effectively utilizing the remaining battery power of a secondary battery, and a control method thereof.

### SUMMARY OF THE INVENTION

The invention, in one example, is configuration such that a mobile information terminal (1) includes a second battery (108), a controller (101), and a memory apparatus (102), wherein the controller (101) performs prediction of electricity usage and power charging opportunity prediction from schedule be memorized in the memory apparatus (102), and sets power saving mode with different power saving level to reduce power consumption, based on the prediction of electricity usage and the power charging opportunity prediction.

### Advantageous Effect

According to the invention, it is possible to effective use of the remaining battery capacity of a secondary battery and provides a mobile information terminal with high user convenience and its control method.

### BRIEF DESCRIPTION OF THE DRAWINGS

FIG. 1 is a system configuration diagram for power management of a group of mobile information terminals in Example 1.
FIG. 2 is a process flow diagram of power management in Example 1.
FIG. 3A is an example for a usage schedule of mobile information terminal 1A in Example 1.
FIG. 3B is an example for a usage schedule of mobile information terminal 1B in Example 1.
FIG. 3C is an example for a usage schedule of mobile information terminal 1C in Example 1.
FIG. 4 is an example schedule for power charging opportunity prediction in Example 1.
FIG. 5 is a diagram illustrating the power saving mode of the mobile information terminal in Example 1.
FIG. 6 is an example of the remaining battery capacity prediction at a power charging opportunity in Example 1.
FIG. 7A is an example of power saving mode settings when for each mobile information terminal of the remaining battery capacity prediction is small in Example 1.
FIG. 7B is an example of power saving mode settings when for each mobile information terminal of the remaining battery capacity prediction is large in Example 1.
FIG. 8 is an example for the external appearance configuration of an HMD as an example for a mobile information terminal in Example 1.
FIG. 9 is an example for the functional block configuration of a mobile information terminal (HMD) in Example 1.
FIG. 10A is a diagram, the setting lower limit value of the remaining battery capacity is changed according to the predicted arrival time in Example 2.
FIG. 10B is a diagram, the setting lower limit value of the remaining battery capacity is changed according to the predicted charging time in Example 2.
FIG. 11 is an example for power usage result of the user in Example 3.
FIG. 12 is an example for action history of the user in Example 4.
FIG. 13 is a process flow diagram of power management in Example 5.
FIG. 14A is diagram, the threshold for power saving mode switching is changed according to the predicted arrival time in Example 5.
FIG. 14B is diagram, the threshold for power saving mode switching is changed according to the predicted charging time in Example 5.
FIG. 15 is a process flow diagram of power management in Example 6.
FIG. 16 is an example for the display of a charging spot of the mobile information terminal that is the HMD in Example 6.

### MODE FOR CARRYING OUT THE INVENTION

Hereinafter, an embodiment of the present invention will be described by using drawings.

### [Example 1.]

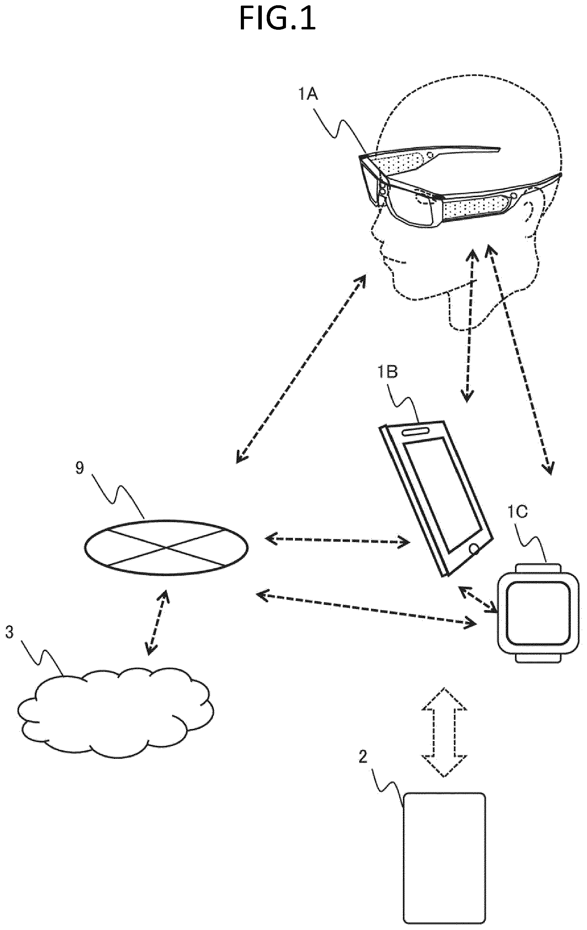

Figure 1 is a system configuration diagram of power management for a group of mobile information terminals in this example. In Figure 1, the system configuration of power management for a group of mobile information terminals has at least one, as mobile information terminal, for example, a mobile information terminal 1A that is HMD (Head Mounted Display), a mobile information terminal 1B that is smartphone, or a mobile information terminal 1C that is smartwatch. The processing operations of the following mobile information terminals may be performed by these terminals alone or in conjunction with each other. In the following descriptions, mobile information terminals 1A through 1C are collectively referred to as mobile information terminals 1. Mobile information terminal may also be described simply as mobile terminals or terminals.

The system configuration may also include a mobile battery 2 that interchanges power to the mobile information terminal. The mobile battery 2 communicates with the mobile information terminal 1, provides the information necessary to manage the power management system, and interchanges the power it holds to the mobile information terminal.

Server 3 performs processing on behalf of each mobile information terminal 1, mediates the transmission and reception of information between each mobile information terminal 1, and provides necessary information, via a communication network 9. The server 3 may be, for example, a local server, a cloud server, an edge server, a net service, or any other form. The server 3 may also process portion of the functions of the mobile information terminal 1.

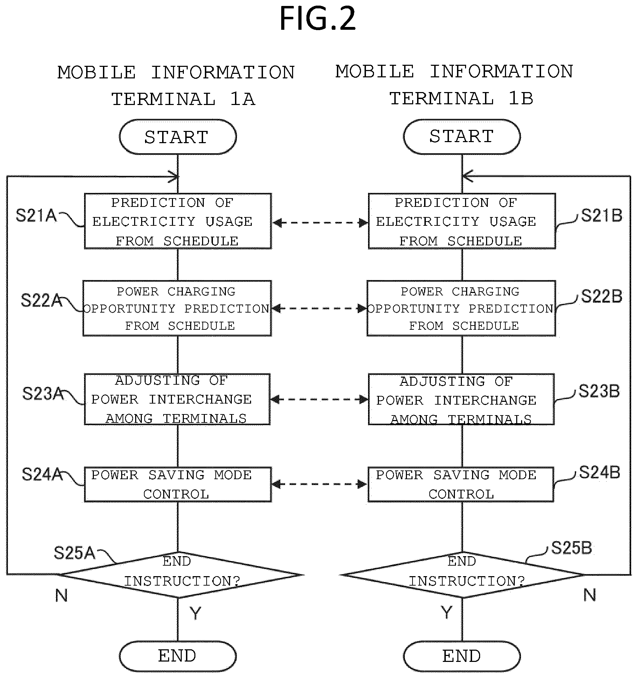

Figure 2 is a process flow diagram of power management in this example. In Figure 2, for example, the mobile information terminal 1A is an HMD and the mobile information terminal 1B is a smartphone. It is also assumed that, prior to this process flow, communication between each mobile information terminal 1 has been established, and the remaining battery capacity is known for each. A mobile battery 2 can also be regarded as a special mobile information terminal whose main function is to interchange power to other mobile information terminals, so it is basically controlled by this flow. However, in the case of a mobile battery 2, the power used by itself is only the power related to battery control, and basically no power saving is performed. However, power saving may be performed if it is possible to save power within a range that does not affect battery control, such as when especially there is an indicator that displays the status.

In Figure 2, in first steps S21A and S21B, prediction of electricity usage is performed from user schedules. Thus, prediction of electricity usage is performed from such as scheduled use of application software (hereinafter abbreviated as "apps"), based on normal usage patterns, viewing reservations. In addition, one mobile information terminal may assist another mobile information terminal in overall information processing, such as when there are differences in information processing capabilities among mobile information terminals, or when schedules are managed centrally.

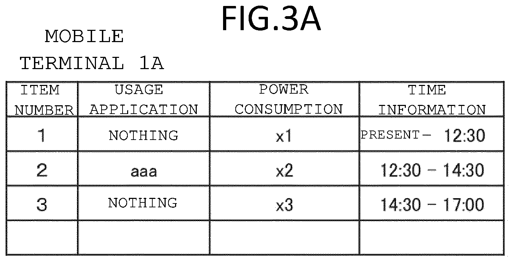

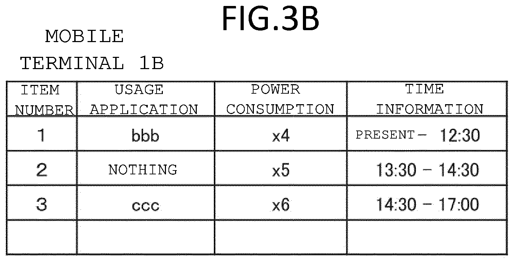

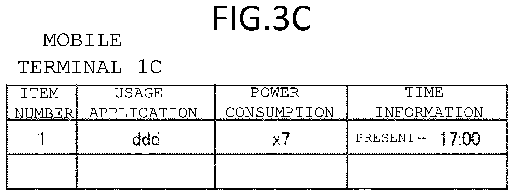

For example, Figures 3A, 3B, and 3B are examples of usage schedules of each mobile information terminal 1. Figures 3A, 3B, and 3C show the usage application, power consumption, and time information, respectively, as a usage schedule of applications with a high load on the mobile information terminal 1A, 1B, 1C. High-load applications are those that play or display a large amount of audio, images, or video, or those that are computationally intensive. It is assumed that, SNS applications, phone calls, etc., which are used occasionally, are classified as low-load applications, and always generate average usage. The baseline power consumption excluding the usage of these high-load apps may be set from the actual values of individual terminals.

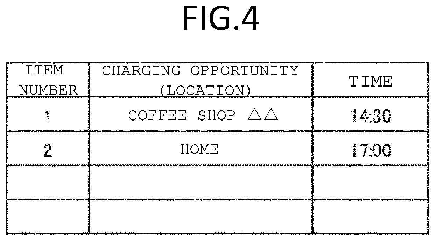

Next, returning to Figure 2, steps S22A and S22B are performed power charging opportunity prediction from the user schedule. Figure 4 shows an example of a schedule for power charging opportunity prediction. In Figure 4, as the user's schedule, shows the opportunities to charge, thus, the locations where charging is to take place and the times to go there. From the user's schedule like this, the opportunities available for charging are predicted. In addition, since this power charging opportunity prediction is common regardless of the mobile information terminal, it is shared among mobile information terminals.

Next, in steps S23A and S23B, power interchange among mobile information terminals is adjusted. That is, assuming the highest degree of power saving mode, at the next charging opportunity, determining whether it can be covered by interchanging power of other mobile information terminals to the mobile information terminal whose remaining battery capacity falls below the setting lower limit value, and notifying to the user. At this time, the efficiency of charging among mobile information terminals is also taken into consideration. In addition, when it cannot be relief by the power interchange, it is notified to user that to select stop using the application, farther, stop using the mobile information terminal. Note that, since loss is generated by the power interchange, the power interchange may be performed automatically, but it is preferable to perform it by the user's instruction. However, in the case of power interchange from the mobile battery 2, it is preferable that the interchanging be performed automatically, since this is the primary function of the mobile battery 2. If power interchange is not performed, power management should be performed for each individual terminal.

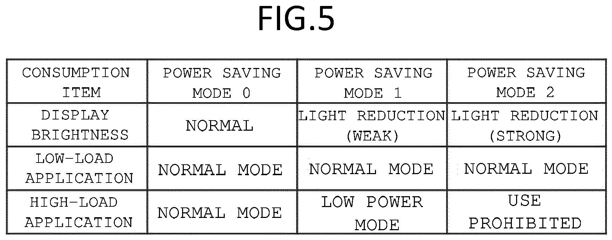

Figure 5 is a diagram illustrates the power saving modes of the mobile information terminal. In Figure 5, the relationship between consumption items that consume power and power saving modes 0, 1, and 2 is shown. Thus, power saving modes 0, 1, and 2 are different power saving levels that reduce power consumption. Power saving mode 0 is a state of no power saving, and the higher the number, the higher the power saving level, and the greater the reduction in power consumption. In other words, a higher power saving mode enhances power saving, while a lower power saving mode relaxes power saving. Specifically, in Figure 5, for the consumption items display brightness, low-load applications, and high-load applications, power saving mode 0 shall be set to normal mode, power saving mode 1 shall be set to weak light reduction, normal mode, and low power mode, respectively, and power saving mode 2 shall be set to strong light reduction, normal mode, and use prohibited, respectively. Thus, low-load applications such as e-mail should be used in normal mode as much as possible, and high-load applications with large unnecessary power consumption should be used in low-power mode in power saving mode 1 and disabled in power saving mode 2.

Next, returning to Figure 2, in steps S24A and S24B, the remaining battery capacity at the next charging opportunity is predicted, from the prediction of electricity usage and the power charging opportunity prediction.

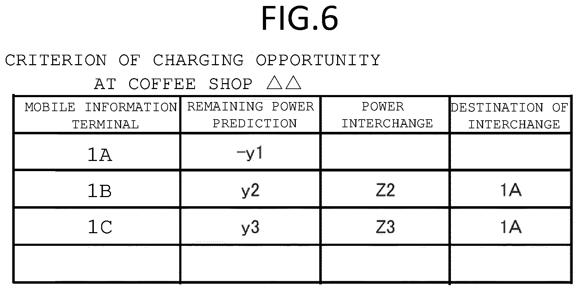

Figure 6 shows an example of remaining battery capacity prediction at a certain charging opportunity. Figure 6 shows the remaining battery capacity prediction for each mobile information terminal, the amount of possible to power interchange, and the destination of interchange, at the charging opportunity (location) at the coffee shop △△ in the charging opportunity schedule table in Figure 4. In Figure 6, show that in mobile information terminal 1A, remaining battery capacity be negative by the time it gets to the coffee shop △ △, in mobile information terminals 1B,1C remaining battery capacity is positive, and it can be power interchanged to mobile information terminal 1A.

Then, based on this remaining battery capacity prediction, the power saving mode is determined until the next charging opportunity. For example, if the remaining battery capacity prediction is below the setting lower limit value, the power saving mode is increased.

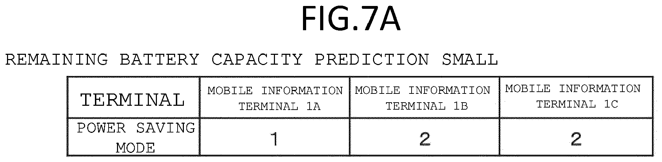

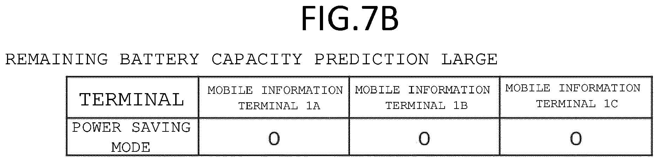

Figures 7A and 7B are examples of power saving mode settings for each mobile information terminal at a given point in time. Figure 7A is a case where the remaining battery power prediction is small and an overall strict power saving mode is set. In Figure 7A, the power saving mode at mobile information terminal 1A (HMD) is set low and loose, considering the priority among them. Figure 7B is an example of power saving mode setting when the remaining battery capacity prediction has a large and has margin. In Figure 7B, all mobile information terminals are in normal mode (i.e., power saving mode 0).

Note that, if it is predicted that the operation of all mobile information terminals can be maintained until the next charging opportunity by power interchange, the power saving mode of some or all mobile information terminals should be set to a lower level within the range where operation can be maintained, considering the priority. Also, the power saving mode to be set will also be changed as needed because the above remaining battery capacity prediction will change over time due to the difference the predicted value of electricity usage.

Next, returning to Figure 2, in steps S25A and S25B, until an end instruction is received, the power management process is repeated with returns to steps S21A and S21B, and when end instruction is received, the power management process end.

Although Figure 2 shows an example for case of two mobile information terminals, the same control applies to three or more. The mobile information terminal that receives an end instruction finishes the power management process, but the power management process continues among the other mobile information terminals that have not received an end instruction. Also, even if only one terminal is left, the process of power management can still be carried out, except for power interchange.

In the above description of control, the power saving mode setting was performed based on a predetermined time called a schedule, but if a deviation from that time is expected in an actual situation, the power saving mode setting is dynamically modified to match each expected time. This dynamic modification can be applied in other examples as well.

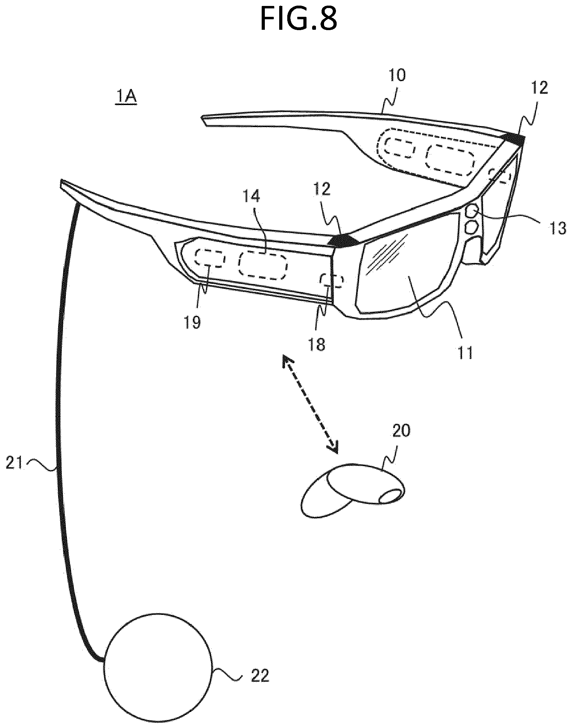

Figure 8 is an example of the external configuration of an HMD as an example of a mobile information terminal in this example. In Figure 8, the mobile information terminal 1A, which is an HMD, has a display including a display surface 11 in a glasses-like housing 10. This display is, for example, a transmissive display, in which a real image of the outside world is transmitted through the display surface 11 and an image is superimposed on the real image. The housing 10 is mounted with a controller, a camera 12, a distance measurement sensor 13, and other sensors 14 etc.

The camera 12 are, for example, two cameras located on the left and right sides of the housing 10, which capture an area including the front of the HMD and acquire images. The distance measurement sensor 13 is a sensor that measures the distance between the HMD and an object in the outside world. The distance measurement sensor 13 may use a TOF (Time Of Flight) type sensor, a stereo camera, or any other type. The sensor 14 include a group of sensors for detecting the position and orientation status of the HMD. The left and right sides of the housing 10 are equipped with audio input device 18 including microphones and audio output device 19 including speakers and earphone jacks.

A mobile information terminal 1A that is an HMD may be attached to an operation apparatus 20 such as a remote controller. In such a case, the HMD performs, for example, short-range wireless communication, with its operation apparatus 20. The user can input instructions regarding the functions of the HMD, move the cursor on the display surface 11, and the like, by operating the operation apparatus 20 with his/her hand. The HMD may communicate and cooperate with an external smartphone, PC, etc. For example, the HMD may receive AR (Augmented Reality) image data from a smartphone application.

A mobile information terminal 1A that is an HMD may display virtual images, such as AR, on its display surface 11. For example, a mobile information terminal 1A that is an HMD generates virtual images to guide the user and display them on the display surface 11.

In addition, the mobile information terminal 1A is equipped with a charging cable 21 and a charger 22. The charger 22 includes an antenna for wireless charging. The mobile information terminal 1A may be the power supply side or the power receiving side. Nore that, the charger may be incorporated into the housing 10, in which case the charging cable 21 is omitted. Also, the charging cable 21 may have a structure that is attach/detach for the housing 10. Furthermore, power may be received and transferred to and from other terminals by wire instead of wireless power transfer. In such a case, the charger 22 shall be read as a connector.

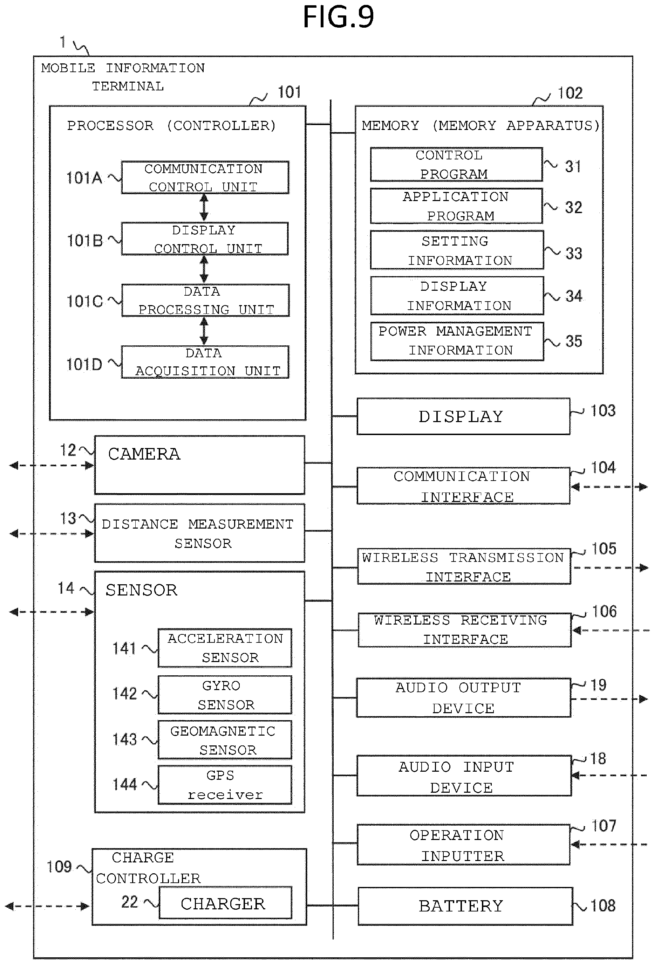

Figure 9 is an example of the functional block configuration of the mobile information terminal 1A, the HMD of Figure 8. Basically, other mobile information terminals 1 have the same configuration. The mobile information terminal 1 includes, such as, a processor 101, memory 102, camera 12, distance measurement sensor 13, sensor 14, display 103, communication interface 104, audio input device 18 including microphone, audio output device 19 including speaker, etc., wireless transmission interface 105, wireless receiving interface 106, operation inputter 107, battery 108, and charge controller 109. These elements are interconnected through buses, etc.

The processor 101 consists of a CPU, ROM, RAM, etc., and constitutes the controller of the HMD. The processor 101 executes processing according to the control programs 31 and / or application programs 32 in memory 102 to realize the function, such as, OS, middleware, applications, and other functions. Memory 102 is a memory apparatus and consists of nonvolatile storage devices, etc., and stores various data and information handled by the processor 101 and, etc. The memory 102 also stores images and detection information, etc., acquired by the camera 12, etc., as temporary information.

A camera 12 acquires an image by converting light incident through the lens into an electrical signal at the image sensor. When such as a TOF (Time Of Flight) sensor is used, the distance measurement sensor 13 calculates the distance to an object from the time it takes for light emitted into the outside world to hit the object and return. Sensor 14 includes, for example, acceleration sensor 141, gyro sensor (angular rate sensor) 142, geomagnetic sensor 143, and GPS receiver 144. The sensor 14 detects the position, orientation, motion, and other states of the HMD using the detection information from these sensors . Note that, not limited to this, the HMD may be equipped with, illumination sensor, proximity sensor, barometric pressure sensor, and the like. The distance measurement sensor 13 and the sensor 14 may not be separate, but the distance measurement sensor 13 may be one of the sensors 14.

A display 103 includes a display drive circuit and a display surface 11 and displays a virtual image or other image on the display surface 11 based on image data of display information 34. Note that, the display 103 is not limited to a transmissive display but may be a non-transmissive display or the like.

The communication interface 104 includes communication processing circuitry for various predetermined communication interfaces, antennas, and other components. Examples of communication interfaces give mobile network, Wi-Fi (registered trademark), Bluetooth (registered trademark), UWB (Ultra Wide Band), infrared, etc. The communication interface 104 performs wireless communication processing, etc. with other mobile information terminals 1 and access points. Also, the communication interface 104 also performs short-range communication processing with the operation apparatus 20.

The wireless transmission interface 105 transmits a wireless signal from a radio wave source accompanied by an identification signal used for position estimation. Here, the wireless signal accompanied by the identification information is, for example, a UWB, Bluetooth, or other signal. The wireless receiving interface 106 receives the wireless signal of the radio wave source accompanied by the above-mentioned identification signal and measures the reception strength, signal timing, etc. Note that, the positional relationship between mobile information terminals may be used as an aid in determining the availability of wireless power supply. A wireless transmission interface 105 and a wireless receiving interface 106 may also be used for information communication. When mobile information terminals that only transmit or receive wireless signals, the necessary devices may be comprised.

The audio input device 18 converts input audio from a microphone into audio data. The audio output device 19 outputs audio from a speaker or the like based on the audio data. The audio input device may be equipped with an audio recognition function. The audio output device may be equipped with an audio synthesis function. The operation inputter 107 is a part that accepts operation input to the HMD, e.g., power on/off, volume adjustment, etc., and is configured of hardware buttons, touch sensors, etc. The battery 108 is a secondary battery and supplies power to various parts of the mobile information terminal 1.

A controller by the processor 101, has a communication control unit 101A, display control unit 101B, data processing unit 101C, and data acquisition unit 101D, as examples of functional block configurations realized by processing.

The memory 102 stores control program 31, application program 32, setting information 33, display information 34, power management information 35, etc. The control program 31 is a program to realize power management of the mobile information terminal 1. Application program 32 are various programs used by users. Setting information 33 includes system setting information and user setting information related to each function. Display information 34 includes image data for displaying virtual images on the display surface 11 and position coordinate information. Power management information 35 is information related to the remaining battery capacity of the own terminal and other terminals, estimated power usage, charging opportunities, and power saving mode, for performing power management.

The communication control unit 101A controls communication processing using the communication interface 104, such as when communicating with other mobile information terminals 1. The display control unit 101B controls the display of virtual images, etc. on the display surface 11 of the display 103 using display information 34.

The data processing unit 101C reads and writes power management information 35, predicts the remaining battery capacity of its own and other terminals, predicts charging opportunities, sets power saving modes, etc. This processing may be performed at each terminal or at the representative terminal. The data acquisition unit 101D acquires data on the remaining battery capacity of its own terminal and information on other terminals, etc.

The mobile battery 2 configuration is the configuration that leaving the configuration necessary to control the battery 108 from the configuration in Figure 9 and restricting the functions as appropriate.

As described above, according to this example, the power saving mode of the mobile information terminal is controlled by the mobile information terminal based on the predicting of the future usage of the mobile information terminal and the power charging opportunity prediction, so that the remaining battery capacity of the secondary battery can be effectively used, and a mobile information terminal with high user convenience and its control method can be provided.

### [Example 2.]

In this embodiment, the point where the setting lower limit value of the remaining battery capacity, which is the criterion for determining power saving mode switching and power interchange, is variable is explained.

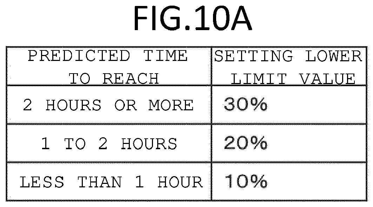

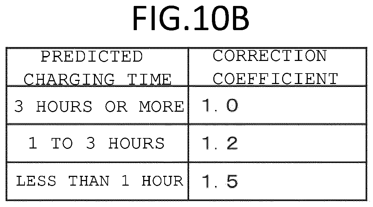

Figures 10A and 10B illustrate the setting lower limit value of remaining battery capacity in this example. In Figure 10A, the setting lower limit value of the remaining battery capacity is changed according to the predicted arrival time to the charging opportunity (location) . This is because the longer the arrival time to the charging opportunity, the larger the prediction error of the remaining battery capacity, and the greater the risk of running out of battery. Specifically, in Figure 10A, the setting lower limit values are, respectively, set to 30%, 20%, and 10% of full charge, when the predicted time to reach is 2 hours or more, 1 to 2 hours, and less than 1 hour.

Furthermore, at the charging opportunity, the above setting lower limit value may be changed depending on the predicted time that can be charged, that is, the predicted time that can be allocated for charging. Shown in Figure 10B is a correction coefficient that is multiplied by the setting lower limit value shown in Figure 10A. It shows the case where the shorter the time available for charging, the larger the setting lower limit value. This is because if the time available for charging is short, the battery cannot be charged sufficiently, and the risk of run out battery after charging increases.

The setting methods are not limited to those shown in the figure, but can be varied. It may also be different for each mobile information terminal. Furthermore, when the charging opportunity is at home, the risk is lower than in the case of other charging opportunities, so the setting lower limit value may be set exceptionally low.

As described above, in addition to the effects of Example 1, this example provides a mobile information terminal and its control method that can reduce the possibility of running out of battery more and also does not take up too much of the remaining battery margin.

### [Example 3.]

In Example 1, performs the prediction of electricity usage from user schedules. In contrast, this example describes a point in which prediction of electricity usage may be performed by considering the power usage result of the user.

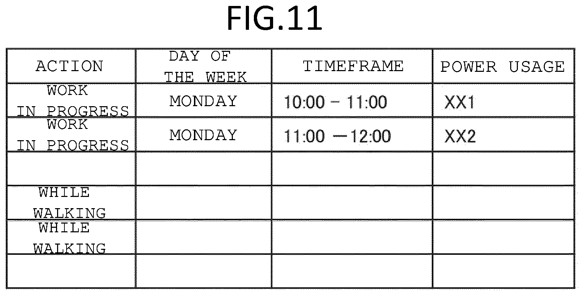

Figure 11 is an example of the power usage result of the user in this embodiment. In Figure 11, the average power usage result by action, day of the week, and timeframe is described. These user usage results may be considered for prediction of electricity usage. User behavior is estimated by inspecting camera information and HMD movements. Non-habitual power use is taken into account in the power usage prediction by reading from the schedule book the records of scheduled power consumption of the terminal, such as viewing reservations.

As described above, this example allows more accurate power usage prediction to be implemented in addition to the effects of Example 1.

### [Example 4.]

In Example 1, power charging opportunity prediction was performed from the user schedule. In contrast, this example describes a point where power charging opportunity prediction can be performed from action history of the user.

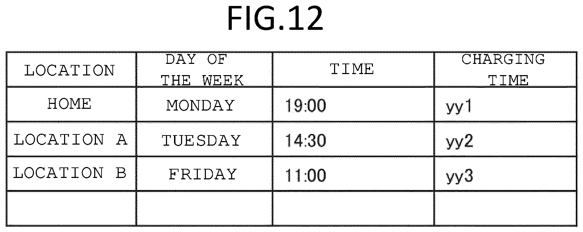

Figure 12 is an example of the action history of the user in this embodiment. In Figure 12, the location, day of the week, time, and charging time are noted. These, the action history of the user, may be taken into account for power charging opportunity prediction.

Note that, if charging at a certain location is a patterned behavior, the charging opportunity shall be based on the record. If the behavior is not habitual, then the charging opportunity shall be based on reading the schedule of activities from the schedule book and looking for a place where charging is possible.

As described above, this example allows more accurate power charging opportunity prediction to be implemented in addition to the effects of Example 1.

### [Example 5.]

In this example, power management is performed using only power charging opportunity prediction, not prediction of electricity usage.

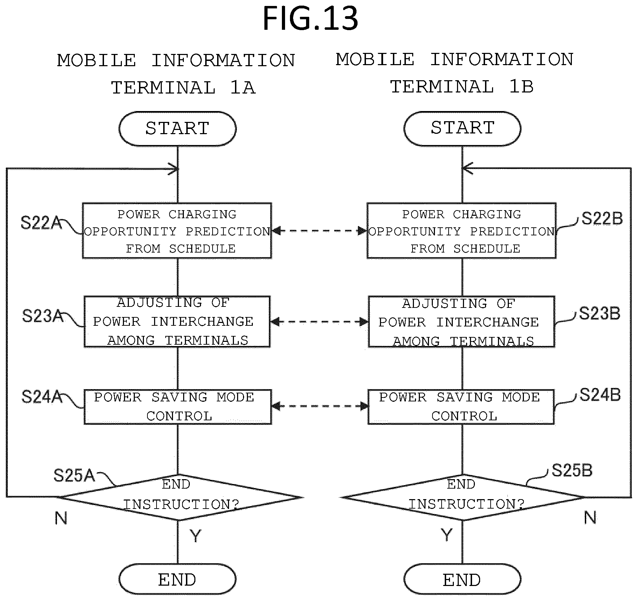

Figure 13 is a process flow diagram of power management in this example. In Fig. 13, the same configuration as in Fig. 2 is marked with the same symbol and its description is omitted. In Fig. 13, the difference from Fig. 2 is that steps S21A and S21B of prediction of electricity usage from user schedules are omitted.

In Figure 13, in steps S24A and S24B of the power saving mode control, change to the value of the remaining battery capacity that switch the power saving mode, and switch the power saving mode by the time until reach the charging opportunity. Note that, in order to avoid as strict a power saving mode as possible, power may be interchanged from terminals that can afford it.

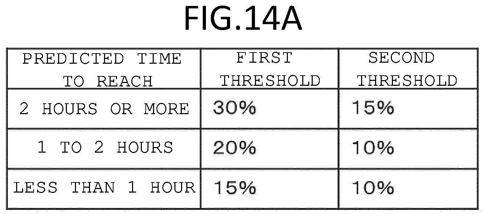

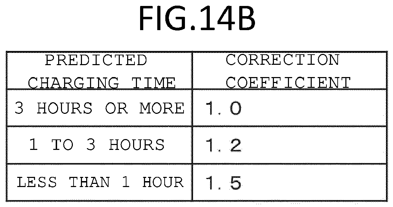

Figures 14A and 14B illustrate the threshold for power saving mode switching in this example. In Figure 14A, the threshold for power saving mode switching is changed according to the predicted arrival time to the charging opportunity. The first threshold is the threshold for switching from power saving mode 0 to power saving mode 1. The second threshold is the threshold for switching from power saving mode 1 to power saving mode 2. This is because the longer the arrival time to the charging opportunity, the greater the prediction error of the remaining battery capacity and the greater the risk of running out of battery. Specifically, in Figure 14A, the first threshold is set to 30%, 20%, and 15% of full charge, and the second threshold is set to 15%, 10%, and 10% of full charge for cases where the predicted time to reach the point is more than 2 hours, 1 to 2 hours, and less than 1 hour, respectively.

Furthermore, in the charging opportunity, the above first and second thresholds may be varied depending on the predicted time that can be charged, that is, the predicted time allocated for charging. Shown in Figure 14B are the correction coefficients that are multiplied by the first and second thresholds shown in Figure 14A. It shows the case where the shorter the time available for charging, the larger the first and second thresholds. This is because if the time available for charging is short, the battery cannot be charged sufficiently, and the risk of run out battery after charging increases. Note that, the setting method is not limited to this.

As described above, this example provides a mobile information terminal and its control method for high user convenience by enabling effective use of the remaining battery capacity of the secondary battery by allowing the mobile information terminal to control the power saving mode of the mobile information terminal based on the power charging opportunity prediction of the mobile information terminal.

### [Example 6.]

This example describes the process when charging is necessary even if the power saving mode is switched by the power saving mode control described in Example 1-5.

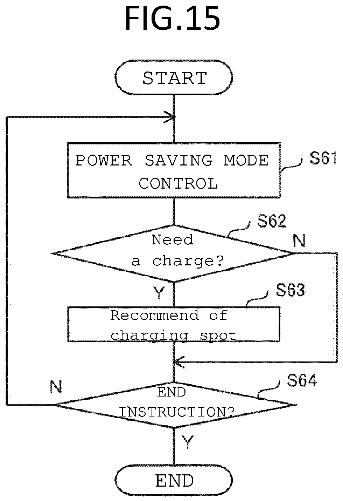

Figure 15 is a process flow diagram of power management in this example. In Figure 15, step S61 is the process of switching the power saving mode by the power saving mode control described in Example 1-5. Then, in step S62, for example, the power saving mode is at maximum and a determination is made as to whether charging is necessary based on the power usage. For example, a threshold value for the remaining battery capacity is set, and if the battery capacity falls below the threshold value, it is determined that charging is necessary. And, if charging is necessary, charging spots are searched and recommending them to the user, in step S63. The search is conducted by searching for information on the Internet or by using cameras or beacons to search for charging spots in the surrounding area. In step S64, the process returns to step S61 and repeats the power management process, until an end instruction is received, and the power management process is end by receiving the end instruction.

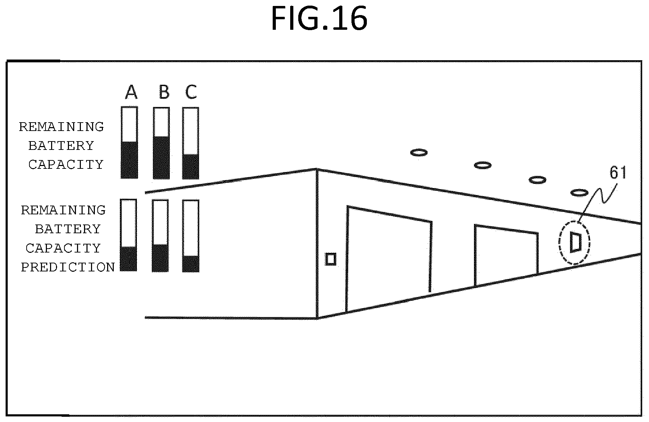

Figure 16 is an example of the display of a charging spot for a mobile information terminal 1A, which is the HMD in this embodiment. In Figure 16, the outer frame represents the user's field of view when the HMD is optical see-through, and the field of view of the display when the HMD is video see-through.

As shown in Figure 16, the charging spot 61 is an AR object and is superimposed on an image of the outside world. The current remaining battery capacity and the predicted remaining battery capacity may also be displayed for each mobile information terminal 1A, 1B, 1C.

As described above, this example provides a mobile information terminal and its control method that is highly convenient for the user because it can search for charging spots and recommend them to the user when charging is necessary.

The above examples have been described, and the invention will contribute to the realization of the SDGs (Sustainable Development Goals), especially item 7 energy.

The above examples, for the invention in an easy to understand, are described in detail to explain and are not necessarily limited to those with all the described configurations. For example, the programs described in each processing example may be independent programs, or multiple programs may constitute a single application program. In addition, the order in which each process is performed may be interchanged for execution. The functions, etc. of this example described above are described as being realized in software by the CPU executing an operation program that realizes the respective functions, etc. However, some or all of them may be realized in hardware by, for example, designing them in an integrated circuit. In addition, part or all of each function may be realized by a server. Programs that realize each function, tables, files, and other information may be stored in memory, hard disks, SSD (Solid State Drives), or other recording media, IC cards, SD cards, DVDs, or other recording media, or may be stored in devices on a communication network. It is also possible to replace part of the configuration of one example with the configuration of another example, and it is also possible to add the configuration of another example to the configuration of one example. In addition, relating to the portion of configuration of each example, it is possible to add, delete, or replace other configurations.

### REFERENCE SIGNS LIST

- 1, 1A~1C: mobile information terminal
- 2: mobile battery
- 3: server
- 9: communication network
- 10: housing
- 11: display surface
- 35: power management information
- 101: processor
- 101C: data processing unit
- 101D: data acquisition unit
- 102: memory
- 103: display
- 107: operation inputter
- 108: battery
- 109: charge controller
- 61: charging spot

## Claims

1. A mobile information terminal (1) includes a second battery (108), a controller (101), and a memory apparatus (102), wherein
the controller (101) performs prediction of electricity usage and power charging opportunity prediction from schedule be memorized in the memory apparatus (102), and sets power saving mode with different power saving level to reduce power consumption, based on the prediction of electricity usage and the power charging opportunity prediction.

2. The mobile information terminal (1) according to claim 1, wherein
if each time on the schedule is expected to deviate from actual usage, the power saving mode setting is dynamically modified based on the expected time.

3. The mobile information terminal (1) according to claim 1, wherein
the mobile information terminal (1) predicts the remaining battery capacity of the second battery (108) at the next charging opportunity from the prediction of electricity usage and power charging opportunity prediction, and changes the power saving mode so that the power saving level becomes higher if the remaining battery capacity prediction falls below a setting lower limit value.

4. The mobile information terminal (1) according to claim 1, wherein
the prediction of electricity usage performs prediction from the viewing reservation and/or the scheduled use of application software with high load, and
the power charging opportunity prediction performs prediction that the opportunity to charge and the chargeable opportunity from the time of go there.

5. The mobile information terminal (1) according to claim 1, wherein
if battery capacity of the second battery (108) falls below the setting lower limit value at the next charging opportunity, the controller (101) determines whether the power can be covered by power interchange from other mobile information terminals or mobile batteries.

6. The mobile information terminal (1) according to claim 3, wherein
the mobile information terminal (1) changes the setting lower limit value according to the predicted arrival time to the charging opportunity, and the longer the predicted arrival time to the charging opportunity, performs to larger the setting lower limit value.

7. The mobile information terminal (1) according to claim 6, wherein
the mobile information terminal (1) changes the setting lower limit value according to the predicted time that can be charged at the charging opportunity, the shorter the predicted time that can be charged, performs to the larger the setting lower limit value.

8. The mobile information terminal (1) according to claim 1, wherein
the prediction of electricity usage is performed by considering the power usage result of the user.

9. The mobile information terminal (1) according to claim 1, wherein
the power charging opportunity prediction is performed by considering the electric action history of the user.

10. A mobile information terminal (1) includes a second battery (108), a controller (101), and a memory apparatus (102), wherein
the controller (101) performs prediction of charging opportunity from schedule be memorized in the memory apparatus (102), and sets power saving mode with different power saving level to reduce power consumption, based on the time until reach the charging opportunity.

11. The mobile information terminal (1) according to claim 10, wherein
the longer the arrival time to the charging opportunity, the larger the threshold value for switching to the power saving mode.

12. The mobile information terminal (1) according to claim 11, wherein
the threshold value is changed according to the predicted time that can be charged at the charging opportunity, and the shorter the predicted time that can be charged, the larger the threshold value is.

13. The mobile information terminal (1) according to claim 1, wherein
the controller (101) searches for charging spots and notifies the user when the set power saving mode is at the maximum power saving level and the secondary battery needs to be charged.

14. The mobile information terminal (1) according to claim 13, comprising:
a display (103), wherein
the mobile information terminal (1) displays the charging spot on the display (103) superimposed on the external image.

15. A control method for a mobile information terminal (1) that supplies power by a secondary battery (108), wherein
performing prediction of electricity usage and power charging opportunity prediction from usage schedule,
setting power saving mode with different power saving level to reduce power consumption of the secondary battery (108), based on the prediction of electricity usage and the power charging opportunity prediction.
